# FASCICULE DE BREVET EUROPEEN

(11) **EP 0 273 781 B1**
(45) Date de publication et mention de la délivrance du brevet: **17.03.1993**
(21) Numéro de dépôt: 87402302.1
(22) Date de dépôt: 15.10.1987
(51) Int. Cl.: H02G 1/12

(54) **Outil pour apprêter un câble électrique**
Elektrisches Kabelzubereitungswerkzeug
Tool to prepare an electrical cable

(30) Priorité: 27.11.1986 FR 8616569
(43) Date de publication de la demande: 06.07.1988
(73) Titulaire: Roux, Robert, Tuffe F-72160 Connerre (FR)
(72) Inventeur: Roux, Robert, Tuffe F-72160 Connerre (FR)
(74) Mandataire: Dawidowicz, Armand

(56) Documents cités:
- EP-A- 0 070 554
- DE-B- 1 190 071
- FR-A- 2 121 431

## Description

La présente invention concerne le travail réalisé sur les câbles électriques notamment multifilaires de grosse section afin d'éliminer la couche d'isolant principale qui enrobe les fils conducteurs unitaires lesquels sont eux-mêmes isolés par leur propre couche d'isolation.

Un outil pour réaliser ce travail est décrit dans FR-A-2 121 431, outil qui comporte un corps dans lequel est ménagé un passage de tourillonnement destiné à recevoir le bout du câble à dénuder, ce corps comportant au moins un couteau qui fait saillie sur une distance réglable à l'intérieur du passage et qui présente deux tranchants, l'un sensiblement radial et l'autre à l'extrémité interne du premier tranchant qui est parallèle à l'axe du passage. En faisant tourner l'outil autour du câble, on découpe, dans la couche d'isolant principale, un copeau hélicoïdal dont l'épaisseur est réglée par la saillie du couteau dans le passage de tourillonnement.

Il est bien évident que, dans un tel outil, la précision de l'épaisseur radiale d'isolant découpée dépend de la précision avec laquelle est réglée la saillie du couteau et du jeu pouvant exister entre le câble et les parois constituant le passage de tourillonnement.

Or les câbles ont, selon le nombre et la section des conducteurs unitaires, des diamètres très variables que peuvent aller en pratique de 15 à 65 mm.

Dans FR-A-2 121 431 cette adaptation du passage de tourillonnement au diamètre de câble est obtenue en constituant le corps délimitant ce passage par deux blocs adjacents mobiles l'un par rapport à l'autre, le passage étant réalisé par deux rainures de préférence de section en V prévues dans les surfaces en regard desdits blocs, l'un des blocs étant muni d'au moins deux tiges de guidage sur lesquelles coulisse l'autre bloc par des forages correspondants, les deux blocs étant soumis à l'action de moyens élastiques qui tendent à les écarter tandis qu'un écrou de réglage vissé sur l'une des tiges qui est filetée rapproche les deux blocs en surmontant ladite force de sollicitation à l'écartement des moyens élastiques.

Ce mode de réalisation du corps et notamment du passage de tourillonnement fait que la capacité d'adaptation de l'outil aux différents diamètres de câble est extrêment réduite. En effet, pour obtenir un centrage du câble dont l'isolant principal présente une certaine plasticité, il faut que les génératrices selon lesquelles s'effectue le guidage, c'est-à-dire celles qui sont en appui sur les surfaces des rainures en V des blocs du corps de guidage, aient un écartement angulaire suffisant. En outre il est bien évident que si les blocs portant les deux gorges en V peuvent être suffisamment rapprochés pour s'adapter autour du câble de diamètre minimal, les corps vont, avec un câble de diamètre maximal, être en contact avec la surface du câble par les arêtes des bords des gorges, ce qui va empêcher le tourillonnement. La réalisation d'un outil de ce type adaptable à toute la gamme des diamètres de câbles paraissait géométriquement impossible en raison de plus de la nécessité de fixer à la fois sur les blocs le couteau principal et, soit le couteau à arête de coupe de direction opposée qui est parfois prévu sur l'outil pour sectionner par rotation inverse le copeau sous lequel il s'engage au cours de la rotation normale pour le soulever, soit la lame de butée qui y est substituée, et de régler la saillie des couteaux ou de la lame de butée dans le passage. En pratique donc il fallait disposer d'au moins deux outils de ce type pour couvrir toute la gamme des diamètres usuels.

La présente invention a pour but de remédier à cet inconvénient et elle a pour objet un outil du type rappelé ci-dessus dans lequel la surface de l'un des blocs du corps réalisant la ou les génératrices de guidage du tourillonnement du câble s'engage entre les surfaces en V constituant, sur l'autre bloc du corps, les génératrices opposées de guidage du tourillonnement du câble.

Deux modes de réalisation sont possibles dans le cadre de la définition ci-dessus de l'invention.

Selon un premier mode de réalisation, le guidage au tourillonnement entre le câble et l'outil est un guidage selon trois génératrices, l'un des blocs présentant une gorge de section sensiblement en V et l'autre bloc une saillie ayant sensiblement la même section de façon à pouvoir s'engager dans la gorge, l'arête de cette saillie étant tronquée selon un plan longitudinal transversal pour réaliser une surface suffisamment large entourant la génératrice d'appui qui se situe dans le plan médian du dièdre de la gorge en V. Il est bien évident qu'avec ce mode de réalisation, il suffit que la gorge en V du premier bloc soit suffisamment large pour que le câble de plus gros diamètre engagé dans celle-ci soit en appui contre les surfaces latérales de la gorge et non contre les arêtes et que la saillie de l'autre bloc puisse être engagée suffisamment dans la gorge pour que le triangle subsistant entre son plan transversal d'extrémité et le sommet du dièdre de la gorge en V soit plus petit que le triangle exinscrit à la section du câble la plus petite.

Selon un second mode de réalisation, le guidage au tourillonnement entre le câble et l'outil est un guidage selon quatre génératrices réparties entre deux dièdres en vis-à-vis, les blocs réalisant chacun de ces dièdres sous la forme d'une gorge en V et les parties en vis-à-vis des blocs, de part et d'autre de cette gorge, étant subdivisées par des fentes décalées permettant l'interengagement des deux blocs par emboîtement coulissant des lames séparant lesdites fentes. Avec ce mode de réalisation, le guidage au tourillonnement est assuré selon des longueurs successives alignées de chaque génératrice, chaque longueur correspondant à l'épaisseur d'une lame, et il suffit que les gorges en V des deux blocs soient suffisamment larges pour que le câble de plus gros diamètre engagé dans celles-ci soit en appui contre les surfaces latérales des lames de la gorge et non contre les arêtes et, qu'au maximum d'interengagement des lames des blocs, le losange défini par les deux dièdres soit plus petit que le losange de mêmes angles aux sommets exinscrit à la section du câble de plus petit diamètre.

En ce qui concerne ce deuxième mode de réalisation, on a déjà décrit dans DE-B-1·90.071 un appareil pour apprêter un câble électrique qui comporte un mors constitué par deux blocs réalisant deux dièdres en vis-à-vis de forme en V, les parties en vis-à-vis des blocs étant subdivisées par des fentes décalées permettant l'interengagement des blocs par emboîtement des lames séparant lesdites fentes. Dans ce brevet le mors ci-dessus est un mors de serrage destiné non à guider le câble à la rotation mais à l'immobiliser à la rotation et les lames s'interpénétrant sont suffisamment espacées pour déformer au serrage le câble selon une sinusoïde située dans le plan passant par les arêtes des dièdres. Ce document ne peut donc suggérer un dispositif de guidage au tourillonnement puisqu'il a au contraire pour objet un organe de serrage déformant le câble pour l'immobiliser contre toute rotation.

Selon une autre caractéristique de l'invention, le réglage de la saillie radiale du ou des couteaux s'effectue par une vis du type dit micrométrique dans laquelle la rotation d'un écrou moleté fait avancer ou reculer le couteau.

Selon une autre caractéristique, une butée, mobile le long d'une tige solidaire d'un des blocs et parallèle à l'axe du câble, est réglable, de préférence au moyen d'une vis micrométrique, pour limiter par butée contre l'extrémité du câble la longueur de câble dénudée.

D'autres caractéristiques de l'invention apparaîtront à la lecture de la description détaillée de deux modes de réalisation de l'outil conforme à l'invention, faîte ci-après avec référence au dessin ci-annexé dans lequel.

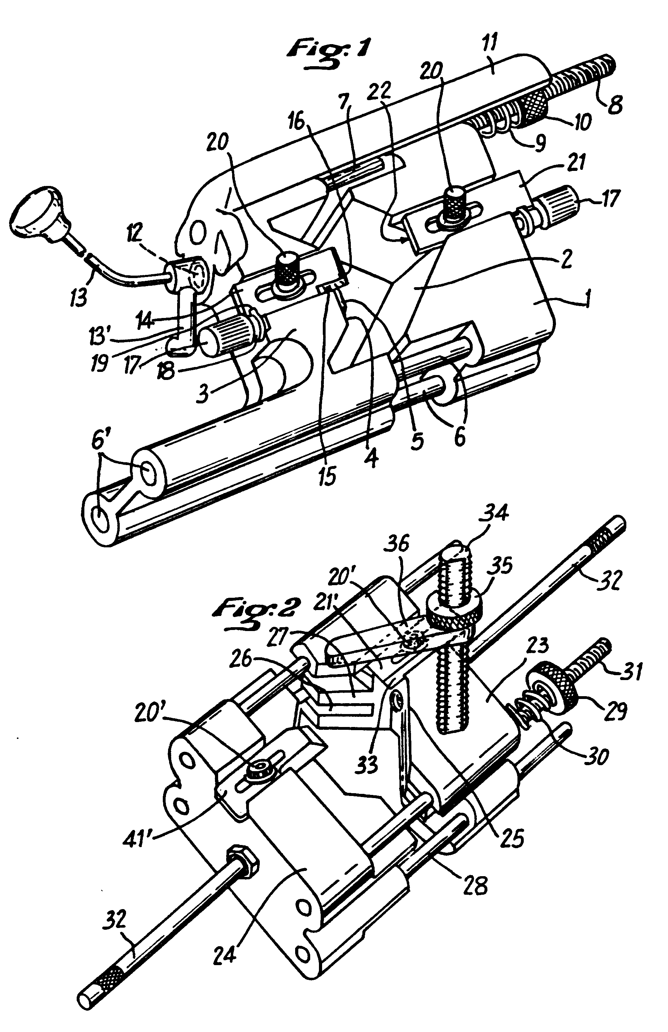

Fig. 1 est une vue en perspective de l'outil selon un premier mode de réalisation et Fig. 2 est une vue correspondant à Fig. 1 pour un deuxième mode de réalisation muni d'une butée de réglage de la longueur de câble dénudée.

Dans la figure 1, la référence 1 désigne le bloc du corps comportant une gorge en V 2 et la référence 3 le bloc complémentaire. Conformément à l'invention, ce bloc 3 porte une saillie prismatique de même section que la gorge 2, l'extrémité de ladite saillie prismatique du bloc 3 faisant face à cette gorge étant tronquée en 4 de manière à réaliser une surface plane comportant éventuellement une partie centrale 5 en relief qui réalise la génératrice de contact entre le bloc 3 et le câble, lequel est pris entre ladite surface 5 et les deux surfaces de la rainure en V 2.

Comme habituellement, les deux blocs sont guidés l'un par rapport à l'autre, d'une part, par des tiges 6 qui s'engagent à coulissement dans les canaux tubulaires 6' solidaires de l'autre bloc, d'autre part, par une tige 7 solidaire d'un des blocs et coulissant dans un perçage de l'autre bloc, l'extrémité de cette tige étant filetée en 8 pour permettre de solliciter au rapprochement les deux blocs par un ressort 9 interposé, autour de ladite tige, entre la face arrière du bloc 1 et un écrou moleté 10 se vissant sur l'extrémité filetée.

La partie filletée 8, le ressort 9 et l'écrou moleté 10 sont protégés par une gouttière 11 solidaire du bloc opposé, gouttière à l'autre extrémité de laquelle est prévu un trou taraudé 12 pour la fixation d'une poignée de manoeuvre 13 qui peut être bloquée en position par un écrou à levier 13'.

Sur le corps 3 est monté coulissant dans une glissière un couteau 14 qui présente deux tranchants, l'un 15 qui est dirigé vers l'arête du dièdre 2, c'est-à-dire radialement par rapport au câble mis en place dans l'outil, et l'autre 16 qui lui est perpendiculaire. Ce couteau est du type connu en soi et sa saillie par rapport à la face d'appui 5 est réglable à l'aide d'un écrou moleté 17 comportant un collet 18 qui s'engage dans une encoche 19 à l'arrière de la lame de couteau, le couteau étant bloqué en position après réglage par une vis de serrage 20. A l'opposé et au-dessus de l'arête du dièdre formé par la rainure en V 2 est fixée une lame 21 dont l'extrémité 22 forme butée pour la partie dénudée du câble. La position ou la saillie radiale de cette lame 21 est également réglable au moyen d'un écrou moleté 17 et blocable en position au moyen d'une vis 20.

Cet outil assure un guidage de l'outil sur le câble selon trois génératrices et le diamètre minimal du câble qu'il est capable de dénuder correspond au triangle exinscrit subsistant entre la surface 5 et les deux faces de la rainure en V 2 lorsque les faces latérales de la saillie prismatique du bloc 3 sont en appui contre lesdites surfaces de la rainure en V 2. Le diamètre maximum du câble qu'il est possible de dénuder correspond à une section circulaire ayant en pratique comme diamètre la distance entre les arêtes de la rainure en V 2. En pratique ce diamètre peut être compris entre 15 et 65 mm.

Dans le mode de réalisation de la figure 2, les blocs 23 et 24 ont sensiblement la même forme et ils présentent sur leurs faces en vis-à-vis des rainures en V 25 dont l'arête au fond du dièdre est tronquée. Conformément à l'invention, les deux blocs 23 et 24 comportent sur leurs faces en regard des fentes telles que 26 qui laissent subsister des lames 27. Les lames 27 de l'un des corps s'engagent, lors du rapprochement des deux corps, dans les fentes 26 de l'autre. Ceci permet de réduire la section de guidage au tourillonnement jusqu'à la mise en butée de l'extrémité des lames 27 de l'un des blocs au fond des rainures 26 du bloc opposé.

Dans le mode de réalisation de la figure 2, le coulissement des blocs 23, 24 l'un par rapport à l'autre est guidé de façon connue par des tiges 28 solidaires de l'un des blocs, ici le bloc 24, et s'engageant de façon coulissante dans des perçages de l'autre bloc, ici le bloc 23. Le rapprochement des deux blocs est réglé par un écrou moleté 29 et un ressort 30, l'écrou moleté se vissant sur l'extrémité filetée 31 de l'une des tiges 28. La référence 32 désigne des tiges de manoeuvre pour faire tourner l'outil autour du câble à dénuder. La référence 14' désigne le couteau principal qui est en tout point analogue au couteau 14 ci-dessus à l'exception du fait qu'il ne comporte pas le dispositif 17-19 de réglage de sa saillie mais seulement une vis de blocage 20'. La plaquette 21 est remplacée par un couteau 21' maintenu en position de la même manière par une vis de blocage 20' et ce couteau présente une arête 33 orientée de façon connue en sens inverse de la direction de rotation normale pour, en fin d'opération de dénudage et par rotation inverse sur un tour, sectionner le copeau.

En outre l'outil de la figure 2 présente dans la face supérieure portant le couteau du bloc 23 un trou taraudé pour la fixation, parallèlement à l'axe du passage de guidage au tourillonnement, d'une tige 34 sur laquelle se déplace un écrou micrométrique 35 solidaire au déplacement longitudinal le long de la tige 34 d'une plaquette radiale 36 qui est maintenue orientée par des plats sur la tige 34 de manière à se trouver en permanence au-dessus de l'axe du passage de tourillonnement. De ce fait, la plaquette 36 forme butée pour l'extrémité de la partie dénudée du câble et permet de régler au préalable la longueur de cette partie dénudée.

## Revendications

1. Outil pour apprêter un câble électrique du type comportant un corps dans lequel est ménagé un passage de tourillonnement destiné à recevoir le bout du câble à dénuder, ce corps comportant au moins un couteau (14) qui fait saillie sur une distance réglable à l'intérieur du passage et qui présente deux tranchants, l'un (15) sensiblement radial et l'autre (16) à l'extrémité interne du premier tranchant qui est parallèle à l'axe du passage, le corps délimitant ce passage par deux blocs adjacents (1-2) mobiles l'un par rapport à l'autre,
caractérisé en ce que la surface (5) de l'un des blocs (3) du corps réalisant la ou les génératrices de guidage du tourillonnement du câble s'engage entre les surfaces en V (2) constituant, sur l'autre bloc (1) du corps, les génératrices opposées de guidage du tourillonnement du câble.

2. Outil selon la revendication 1,
caractérisé en ce que le guidage au tourillonnement entre le câble et l'outil est un guidage selon trois génératrices, l'un des blocs (1) présentant une gorge (2) de section sensiblement en V et l'autre bloc (3) une saillie (4) ayant sensiblement la même section de façon à pouvoir s'engager dans la gorge, l'arête de cette saillie étant tronquée selon un plan longitudinal transversal pour réaliser une surface (5) suffisamment large entourant la génératrice d'appui qui se situe dans le plan médian du dièdre de la gorge en V (2).

3. Outil selon la revendication 1,
caractérisé en ce que le guidage au tourillonnement entre le câble et l'outil est un guidage selon quatre génératrices réparties entre deux dièdres en vis-à-vis, les blocs (23-24) réalisant chacun un de ces dièdres sous la forme d'une gorge en V (25) et les parties en vis-à-vis des blocs, de part et d'autre de cette gorge, étant subdivisées par des fentes (26) décalées permettant l'interengagement des deux blocs par emboîtement coulissant des lames (27) séparant lesdites fentes (26).

4. Outil selon l'une quelconque des revendications 1 à 3,
caractérisé en ce que le réglage de la saillie radiale du ou des couteaux (14-21) s'effectue par une vis (17) du type dit micrométrique dans laquelle la rotation d'un écrou moleté fait avancer ou reculer le couteau.

5. Outil selon l'une quelconque des revendications 1 à 4,
caractérisé en ce qu'il comporte une butée (36), mobile le long d'une tige (34) solidaire d'un des blocs (3) et parallèle à l'axe du câble, laquelle est réglable, de préférence au moyen d'une vis micrométrique (35), pour limiter par butée contre l'extrémité du câble la longueur de câble dénudée.

## Claims

1. Tool for preparing an electrical cable, of the type comprising a body in which there is provided a pivotable passage intended to accommodate the end of the cable to be stripped, this body comprising at least one cutter (14) which projects for an adjustable distance into the passage and which has two cutting edges, one (15) substantially radial and the other (16) at the internal end of the first cutting edge which is parallel to the axis of the passage, the body defining this passage by two adjacent blocks (1-3), each movable in relation to the other, characterised in that the surface (5) of one of the blocks (3) of the body forming the pivotable guiding generatrix or generatrices of the cable engages between the V-shaped surfaces (2) forming, on the other block (1) of the body, the opposite pivotable guiding generatrix or generatrices of the cable.

2. Tool according to claim 1, characterised in that the pivotable guidance between, the cable and the tool is a guidance according to three generatrices, one of the blocks (1) having a groove (2) with a substantially V-shaped cross-section and the other block (3) having a projection (4) of substantially the same cross-section so as to be able to engage in the groove, the edge of this projection being truncated according to a transverse longitudinal plane in order to form a sufficiently wide surface (5) surrounding the supporting generatix which is situated in the median plane of the dihedron of the V-shaped groove (2)

3. Tool according to claim 1, characterised in that the pivotable guidance between the cable and the tool is a guidance according to four generatrices divided between two dihedrons facing each other, the blocks (23-24) each forming one of these dihedrons in the form of a V-shaped groove (25) and the parts facing the blocks, on each side of this groove, being subdivided by staggered slots (26) permitting the interengagement of the two blocks by the sliding interlocking of the blades (27) separating said slots (26).

4. Tool according to any of claims 1 to 3, characterised in that the adjustment of the radial projection of the cutter or cutters (14-21) is effected by a screw (17) of the so-called micrometric type in which the rotation of a knurled nut causes the cutter to advance or withdraw.

5. Tool according to any of claims 1 to 4, characterised in that it comprises a stop (36), movable along a spindle (34) internal with one at the blocks (3) and parallel to the axis of the cable, such stop being adjustable, preferably by means of a micrometric screw (35), in order to limit the length of stripped cable by abutment against the end of the cable.

## Patentansprüche

1. Werkzeug zum Zubereiten eines elektrischen Kabels mit einem Körper, in dem ein Drehdurchgang ausgebildet ist, welcher dazu vorgesehen ist, das abzuisolierende Kabelende aufzunehmen, wobei der Körper mindestens ein Messer (14) aufweist, das über eine einstellbare Entfernung in das Innere des Durchgangs hineinragt und zwei Schneiden aufweist, von denen eine (15) etwa radial gerichtet ist und die andere (16) am inneren Ende der ersten Schneide angeordnet ist, welche parallel zur Durchgangsachse verläuft, und wobei der Körper den Durchgang durch zwei benachbarte, relativ zueinander bewegliche Blöcke (1-3) begrenzt, **dadurch gekennzeichnet,** daß die Oberfläche (5) des einen Blockes (3) des Körpers, die den oder die Führungsmantellinien der Drehung des Kabels bildet, zwischen die V-Flächen (2) eingreift, die auf dem anderen Block (1) des Körpers die gegenüberliegenden Führungsmantellinien der Drehung des Kabels bilden.

2. Werkzeug nach Anspruch 1, **dadurch gekennzeichnet,** daß die Führung der Drehung zwischen dem Kabel und dem Werkzeug eine Führung gemäß drei Mantellinien ist, einer der Blöcke (1) eine Nut (2) mit im wesentlichen V-förmigem Querschnitt und der andere Block (3) einen Vorsprung (4) mit im wesentlichen dem gleichen Querschnitt zum Eingreifen in die Nut aufweist, wobei die Kante dieses Vorsprunges in einer transversalen Längsebene abgestumpft ausgebildet ist zur Bildung einer ausreichend großen Fläche (5), die die Stützmantellinie umgibt, die sich in der Mittelebene des Zweiflachs der V-förmigen Nut (2) befindet.

3. Werkzeug nach Anspruch 1, **dadurch gekennzeichnet,** daß die Führung der Drehung zwischen dem Kabel und dem Werkzeug eine Führung gemäß vier Mantellinien ist, die zwischen zwei gegenüberliegenden Zweiflachs verteilt sind, wobei die Blöcke (23, 24) jeweils einen dieser Zweiflachs in Form einer V-förmigen Nut (25) realisiert und die Teile gegenüber den Blöcken beiderseits dieser Nut durch versetzt angeordnete Spalte (26) unterteilt sind, die das Ineinandergreifen der zwei Blöcke erlauben durch gleitendes Ineinandergreifen von Zungen (27), die die genannten Spalte (26) trennen.

4. Werkzeug nach einem der Ansprüche 1 bis 3, **dadurch gekennzeichnet,** daß die Einstellung des radialen Vorsprungs des Messers oder der Messer (14, 21) durch eine Meßschraube (17) erfolgt, in der die Drehung einer Rändelschraube das Messer vorrücken oder zurückbewegen läßt.

5. Werkzeug nach einem der Ansprüche 1 bis 4, **dadurch gekennzeichnet,** daß es einen Anschlag (36) aufweist, der längs einer mit einem der Blöcke (3) verbundenen Stange (34) und parallel zur Achse des Kabels beweglich ist und der vorzugsweise mit Hilfe einer Meßschraube (35) einstellbar ist, um die Länge des abisolierten Kabels durch Anschlag gegen das Kabelende zu begrenzen.
